Europäisches Patentamt

European Patent Office

Office européen des brevets

(11) Publication number: **0 233 805**
**A2**

# EUROPEAN PATENT APPLICATION

(21) Application number: **87400115.9**

(51) Int. Cl.³: **G 02 B 6/44**

(22) Date of filing: **19.01.87**

(30) Priority: **31.01.86 US 825709**

(43) Date of publication of application:
**26.08.87 Bulletin 87/35**

(84) Designated Contracting States:
**CH DE ES FR GB IT LI NL SE**

(71) Applicant: **AMERICAN TELEPHONE AND TELEGRAPH COMPANY**
**550 Madison Avenue**
**New York, NY 10022(US)**

(72) Inventor: **Claxton, James Donald**
**882 Hickory Nut Lane**
**Lawrenceville Georgia 30245(US)**

(72) Inventor: **Scheidt, Gerald Arthur**
**4352 Huntington Circle**
**Dunwoody Georgia 30338(US)**

(72) Inventor: **Shores, Stanley Clayton**
**4925 Lakeside Drive**
**Atlanta Georgia 30360(US)**

(74) Representative: **Bourgognon, Jean-Marie et al,**
**Cabinet Flechner 22, Avenue de Friedland**
**F-75008 Paris(FR)**

(54) **Optical fibre cable.**

(57) A single fiber optical fiber cable includes an optical fiber comprising a core and a cladding. The optical fiber is enclosed by a plastic jacket. Interposed between the optical fiber and the jacket are a plurality of fibrous strands which are strength members for the cable. In a preferred embodiment, the strength members are layless and as such are generally linear and parallel to a longitudinal axis of the cable. The jacket has a predetermined compressive engagement with the strength members which allows the stripability of the jacket from the cable to be controlled.

Fig. 1

EP 0 233 805 A2

Croydon Printing Company Ltd

OPTICAL FIBER TRANSMISSION MEDIA

0233805

## Technical Field

This invention relates to optical fiber transmission media and more particularly to a single fiber optical fiber cable which has an outer diameter that is significantly less than those of the prior art.

## Background of the Invention

An optical fiber cable includes a sheath system which protects an optical fiber which extends along the longitudinal axis of the cable and which serves as an optical communications path. Not only does the sheath system protect the glass fiber, but also it provides the cable with flexibility and with tensile, flexural and impact strength. For multi-fiber cables, the sheath system may include several extruded layers of plastic as well as one or more metallic shields disposed between elements of the sheath system.

Single fiber cables are well known in the art. They may be terminated with biconic connector plugs such as those shown in U. S. Patent 4,512,630. Such cables are used, for example, in central offices to connect cables to optical transmission apparatus.

Generally, a single fiber cable includes a coated optical fiber which is enclosed in a buffer layer. The buffer layer typically is made of an extruded plastic material such as polyvinyl chloride. Over the buffer layer is a yarn which provides strength for the cable and which is enclosed by a plastic jacket. The yarn may be an aramid fibrous yarn and is usually served in a helical fashion about an advancing buffered optical fiber.

One problem with single fiber cables is the maintenance of concentricity between the fiber and the served yarn, particularly during the manufacturing operation. When it is off-center, the buffered fiber has a tendency to conform to the helical path of the served material which may result in microbending of the optical fiber. Microbending may result in a significant loss in transmission through increased signal attenuation. Also, when concentricity is not maintained, it becomes more difficult to connect the single fiber cables so that the optical fibers are aligned precisely. Concentricity of an optical fiber and its coverings makes handling during manufacturing easier, increases the durability of the product and facilitates more precisely aligned connections.

One solution to this problem is to replace the served yarn with an extruded tube, but this solution is a costly one. Instead, the strength members can be served directly over a heavily buffered fiber. The heavy buffering reduces the tendency for the helical serving to induce microbending in the optical fiber. However, the heavy buffering increase production costs without improving the concentricity of the fiber within the serving.

Another solution to the loss of concentricity during manufacture is to keep the fiber taut during the serving operations. If sufficient tension is placed on the buffered fiber as the serve is being applied, and if this tension is maintained during all subsequent operations, the fiber can be maintained in its center position. However, the tension required to do this would be likely to damage or break the buffered optical fibers. Also, residual tension in the optical fiber after cable manufacture can itself result in higher attenuation and poorer mechanical performance. In U. S. Patent 4,441,787, an optical fiber is maintained concentrically within a textile serve by the use of a highly viscous coating which is applied to the optical fiber. The viscous fluid such as, for example, a colloid, is applied over the coated fiber prior to the serving of the yarn.

Other problems exist in the presently used single fiber cables. One relates to size. Because of the buffering, the cross section of the fiber is relatively large. Increased size cables require more space in central office wiring and more time to remove the coverings to access the optical fiber for connectorization. Also, the stress-strain curve for presently used cables, wherein a plurality of strength member yarns are served or wrapped helically about the buffered optical fiber, includes a knee. This occurs because of the tendency of the cable to elongate somewhat prior to the yarn becoming straightened and loaded by tensile loads imparted to the cable. As a result, the optical fibers enclosed by such yarns are stressed which may result in damage to the optical fiber. Further, it has been found that the single fiber cables are somewhat difficult to strip for connectorization. This is particularly true in those instances where it is desired to expose a substantial length of optical fiber for particular connectorization arrangements.

What is needed and what seemingly is not provided by the prior art is a single fiber cable which is small in size, and which does not elongate prior to loading of the strength members therein. Further, the sought-after cable should be one in which the engagement of an outer jacket with underlying materials may be varied to meet particular customer requirements. For example, in one use, it is desired that the covering materials may be removed easily to expose the optical fiber for connectorization. Still further, the sought-after cable should be one which overcomes the prior art problem of microbending caused by helically applied yarn and non-concentric fiber covering.

## Summary of the Invention

The foregoing problems have been solved by the optical fiber cable of this invention. An optical fiber cable includes an optical fiber having a coating applied to an outer surface thereof. At least one length of fibrous material which functions as a strength member extends along the optical fiber. A jacket which is made of plastic material and which encloses the strength member and the optical fiber has a controlled compressive engagement with the at least one length of fibrous material.

In a preferred embodiment, three strands of the fibrous material are disposed about the optical fiber equally spaced in a circumferential direction about its periphery. The fibrous material has unintended stranded to form a strength member which extends in a direction substantially along a longitudinal axis of the fiber. Also, the jacket comprises polyvinyl chloride plastic material which is tubed over the optical fiber in a manner to cause the plastic extrudate to have a controlled drawdown on the strength members.

Because of the layless configuration of each of the strength members in the preferred embodiment, loads applied to the cable are transferred to the strength members immediately. For multifiber cables in which the strength members are applied with a lay, tensile loads applied to the cable cause elongation of the optical fibers before the strength members become effective to resist the loads. As a result, the cable of this invention is far less likely to experience damage to the optical fiber than prior art cables in which the strength members are applied with a lay.

## Brief Description of the Drawing

Other features of the present invention will be more readily understood from the following detailed description of specific embodiments thereof when read in conjunction with the accompanying drawings, in which:

FIG. 1 is a perspective view of an optical fiber cable of this invention:

FIG. 2 is an end sectional view of the cable of FIG. 1;

FIG. 3 is an end sectional view of a prior art single fiber optical cable;

FIG. 4 is a graph which shows the strain associated with tensile loads applied to the cables of FIGS. 1 and 3;

FIG. 5 is an elevational view in section of a connector which may be used to terminate an optical fiber cable of this invention;

FIG. 6 is a perspective view of an optical fiber of FIG. 1 which has one of its ends terminated with a connector and which has one of its ends stripped in preparation for connectorization;

FIG. 7 is a perspective view which shows a single fiber cable having each of its ends terminated with a connector of FIG. 5;

FIG. 8 is a perspective view of a connector arrangement in which two cables each being terminated with a connector of FIG. 5 are connected through a coupler;

FIG. 9 is an end view of a multi-optical fiber cable of this invention;

FIG. 10 is a perspective view of a cable of FIG. 9 with each of the optical fibers thereof being teminated with a connector of FIG. 5;

FIG. 11 is a perspective view of a duplex optical fiber cable; and

FIG. 12 is an end sectional view of the cable of FIG. 11.

Detailed Description

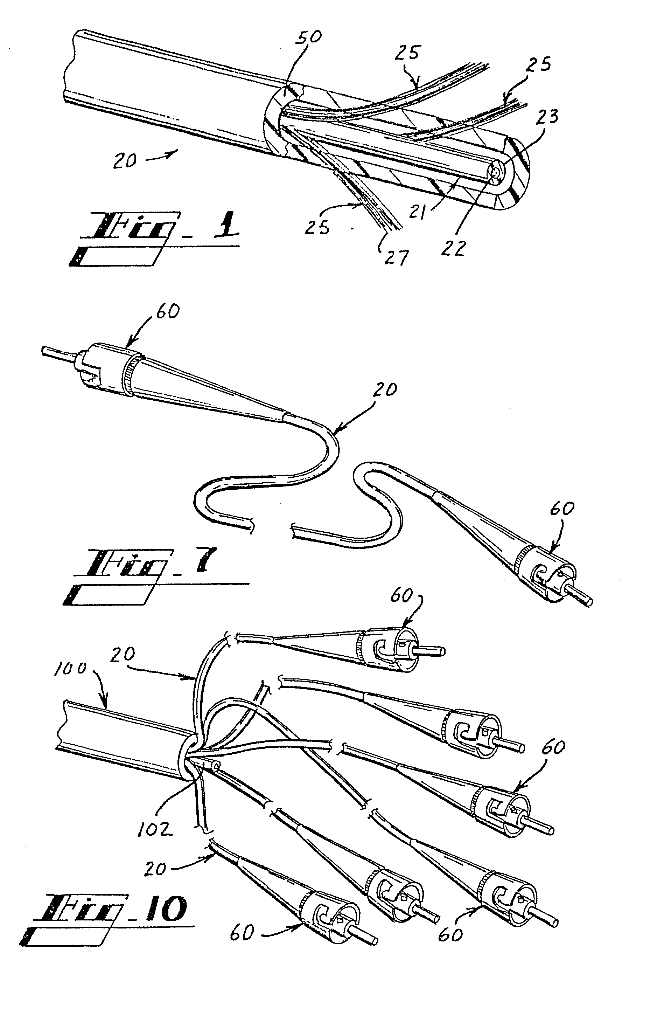

Referring not to FIGS. 1 and 2, there is shown an optical fiber cable 20 of this invention. The optical fiber cable 20 includes an optical fiber 21 which typically includes a core and cladding designated together by the numeral 22 and UV cured coating 23 about the core and cladding. Of course, the optical fiber 21 may include more than one protective coating. See U. S. Patent 4,474,830 which issued on October 2, 1984, in the name of C. R. Taylor and which is incorporated by reference hereinto. The coated optical fiber has an outer diameter of about 0.010 inch.

Disposed in engagement with the coated optical fiber 21 is at least one longitudinally extending yarn 25 which serves as a strength member. The yarn is flexible, lightweight and of high tensile and flexural strength so as to provide protection and strength for the optical fiber. In a preferred embodiment, the yarn is a Kevlar$^R$ yarn, which is an aramid fibrous material manufactured by E. I. Dupont de Nemours and Co. (Inc.) KEVLAR is a registered trademark of the E. I. DuPont de Nemours and Co.

Specifically, the strength members are made of Kevlar$^R$ 49 aramid high modulus fiber yarns. Kevlar$^R$ aramid high modulus organic fiber is a fiber having a relatively high tensile strength and relatively high modulus or stiffness. This product is described in Bulletin K-5 which was published by E. I. DuPont de Nemours and Co. (Inc.) in September 1981.

Each of the yarns includes a plurality of filaments 27-27 which are assembled together generally without twist. The denier of each yarn which is the weight in grams of 9000 meters of the material may vary. Denier is an identification system in which the lower numbers represent the finer sizes. Depending on the end use, the cable 20 may include more yarn of less denier or less yarn of larger denier. In the preferred embodiment, three yarns or strands as they are called, each of 380 denier, are disposed about the optical fiber. The three strands are spaced equally circumferentially about the coated optical fiber 21.

The disposition of the strength member yarns 25-25 or strands over the optical fiber 21 itself seemingly is a departure from the prior art. Exemplary of the prior art is the single fiber cable 30 which is depicted in FIG. 3. As can be seen in that figure, yarn 31 is disposed about a buffer layer 33 having a relatively high wall thickness and which encloses an optical fiber 35 having a coating 36. Over the yarn 31 is a plastic jacket 37. This structural arrangement of elements results in an enlarged cross section and also causes problems during connectorization in that it becomes difficult to strip the buffer layer from the optical fiber.

The strength member yarns 25-25 may be wrapped helically about the coated optical fiber 21 with a lay or may be substantially layless, that is, substantially without intended stranding. Of course, when only one yarn is used, the yarn would most probably be stranded about the coated optical fiber. In the preferred embodiment the yarns 25-25 have a layless configuration. They are applied to an advancing optical fiber such that there is no intended lay in each. This is advantageous during the loading of the cable. During the loading of the cable of FIG. 3, the cable tends to elongate prior to the loading of the yarns. This occurs because the yarns have a lay inasmuch as they are wrapped helically about the buffered optical fiber. Consequently, the yarns tend toward a layless condition before they become loaded and relieve the remainder of the cable from further stress. However, this may be too late to avoid damage to the optical fiber. In the preferred embodiment of this invention, the assumption of the load by the layless yarns under cable loading is substantially instantaneous.

This may be further understood by viewing the load-strain curves shown in FIG. 4. A curve 40 having ordinate values along the right side of the graph and being representative of the strain induced in the cable of FIG. 3 includes a knee 42 which appears at a relatively low stress. As a result, the strain in the cable increases at a faster rate than the load is applied. After the knee is passed, the strain is directly proportional to the load. With the cable 20 of this invention, the load is taken up substantially immediately by the strength member yarns. This should be apparent by viewing a curve 44 which has ordinate values along the left side of the graph and which is representative of the strain induced in the preferred embodiment of the cable 20. There, the strain increases at a rate which is linearly proportional to an increase in load. The knee is eliminated and the optical fiber is substantially free of tensile strain. The peak load for the cable 30 is greater than that for the preferred embodiment of this invention because the cable 30 includes more yarn of a higher denier than the cable 20 and includes a jacket in addition to a buffer layer. Of course, the cable 20 may be provided with a greater number of strength member yarns of relatively high denier to increase its peak load capacity.

As can be seen in FIGS. 1 and 2, the single fiber cable 20 also includes a jacket 50. The jacket 50 is made of a plastic material such as polyvinyl chloride. In the preferred embodiment, the jacket 50 has a wall thickness in the range of about 0.006 to 0.008 inch. With the jacket disposed about the yarn and the optical fiber 20, the cable 20 has an outer diameter of about 0.035 inch. This compares to an outer diameter of about 0.1 inch for prior art single fiber cables.

In the manufacture of the cable 20, the outer jacket 50 is tubed over the yarn instead of being applied by pressure extrusion. This is accomplished with a controlled drawdown to provide a jacket which has a predetermined compressive engagement with the strength members and which is disposed concentrically thereabout. Suitable changes to the die and/or core tube of the extrusion apparatus (not shown) are made to maintain the outer diameter of the cable 20 substantially constant. The wall thickness of the jacket varies with the drawdown. The greater the drawdown, the greater the compressive engagement of the plastic jacket 50 with the strength members 25-25.

Because of the controlled drawdown, the stripability of the jacket 50 of the cable 20 is controlled. In some instances, it is desirable to provide a transition between single optical fiber cables and optical fiber ribbons. In this procedure, as disclosed in U. S. Patent 4,305,642, a substantial length of the covering of the cable is removed to expose the optical fibers. This is done in order to be able to position a plurality of optical fibers on a tape and to enclose them in a second tape to form a ribbon and allow connectorization with an array type connector such as is shown in U. S. Patent 3,864,018.

The stripability is a function of the amount of the drawdown of the plastic jacket 50 about the yarn strength members 25-25. The less the drawdown, the easier it becomes to remove the jacket 50, particularly from a substantial length of the cable. Of course, there may be instances when it is more desirable to have a substantial compressive engagement of the jacket plastic with the underlying yarn.

The predetermined compressive engagement of the jacket plastic with the underlying strength members 25-25 provides a single optical fiber cable which is capable of being manufactured to suit an end user's requirements. By controlling the drawdown of the outer layer of plastic on the underlying strength members, the stripability of the plastic jacket from the cable is controlled. As will be recalled, the outer diameter of the cable is constant. Also, as will be recalled, the number of strength members 25-25 which are disposed between the outer jacket and the optical fiber may be varied, typically ranging between one and four. The greater the number of strength members, the thinner is the jacket wall. Furthermore, the greater the compression between the outer jacket and the strength members, which is caused by greater drawdown, the thicker is the jacket wall.

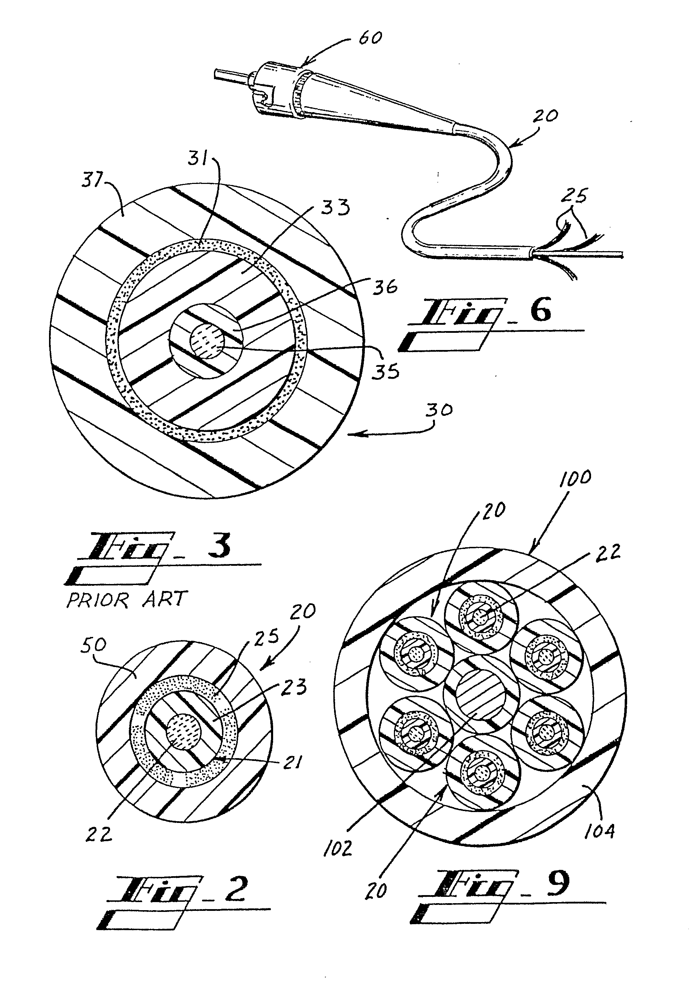

The optical fiber cable of this invention is also advantageous from the standpoint of connectorization. Referring now to FIG. 5, there is shown a connector 60 of the type which may be used to terminate the optical fiber cable 20. An end portion of the cable 20 extends into a terminator 62 having an annular groove 64 on one side of an annular lip 66. A washer 68 disposed about the terminator is received in the groove 64 and engages the lip 66. On the opposite side of the lip 66 is a compression spring 71 which also engages an end flange 73 of the terminator. The spring 71 is disposed within a chamber 75 of a housing 77 of the connector 60.

The terminator 62 includes a passageway 79 in which is received the end portion of the cable 20. The yarn and jacket are removed from an end of the cable to permit an end portion of the optical fiber to be received in a bore 81 of a plug 83. One end of the plug 83 is received in an enlarged cavity 85 of the terminator 62 which communicates with the passageway 79.

As can be seen, an end portion of the optical fiber cable is stripped to remove the yarn and the jacket. The bared portion of the optical fiber extends through the bore 81 of the plug 83. A portion 87 of the yarn is exposed at a location adjacent to the plug 83 and is secured to the wall which defines the passageway 79. This provides strain relief for the optical fiber cable and specifically for the optical fiber. Inasmuch as the jacket and yarn are attached to the connector, strains induced in the connectorized cable are isolated from the optical fiber.

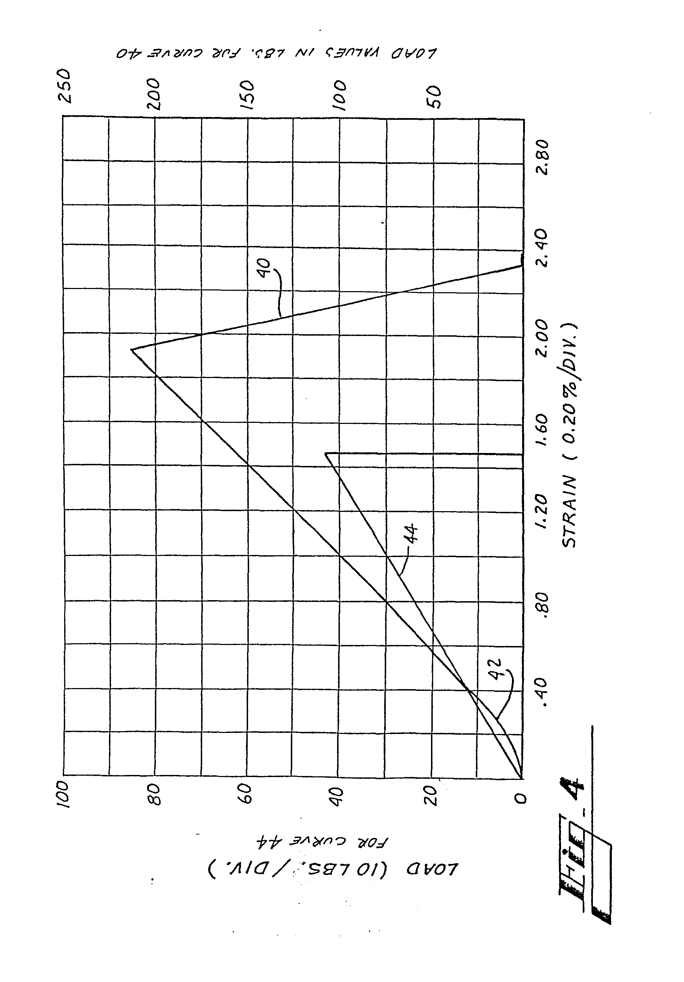

The connector 60 shown in FIG. 5 may be used to terminate one end (see FIG. 6) or both ends (see FIG. 7) of an optical fiber cable 20. In order to interconnect the optical fibers 21-21 of two terminated cables, the plug 83 of each is caused to be received in a sleeve (not shown) which is disposed in a coupler 90 (see FIG. 8). The coupler 90 is tubular and has a slot 92 formed in each end thereof for receiving a pin 94 which projects radially from the terminator 62. The housing 77 of each connector 60 becomes disposed over an end portion 95 of the coupler 90 and a pin 96 bottoms out in the slot 97 and the connector is turned to cause the pin to become disposed in a locking portion 98 of the slot 97.

The single optical fiber cable of this invention overcomes the microbending problems of prior art cables which may be caused by a strength member which is helically applied over a non-concentric covering. In the preferred embodiment, the strength member yarns are applied without intended stranding. Also, because the cable includes only a single buffer jacket about a coated optical fiber, the probability of the occurence of a non-concentric covering is decreased.

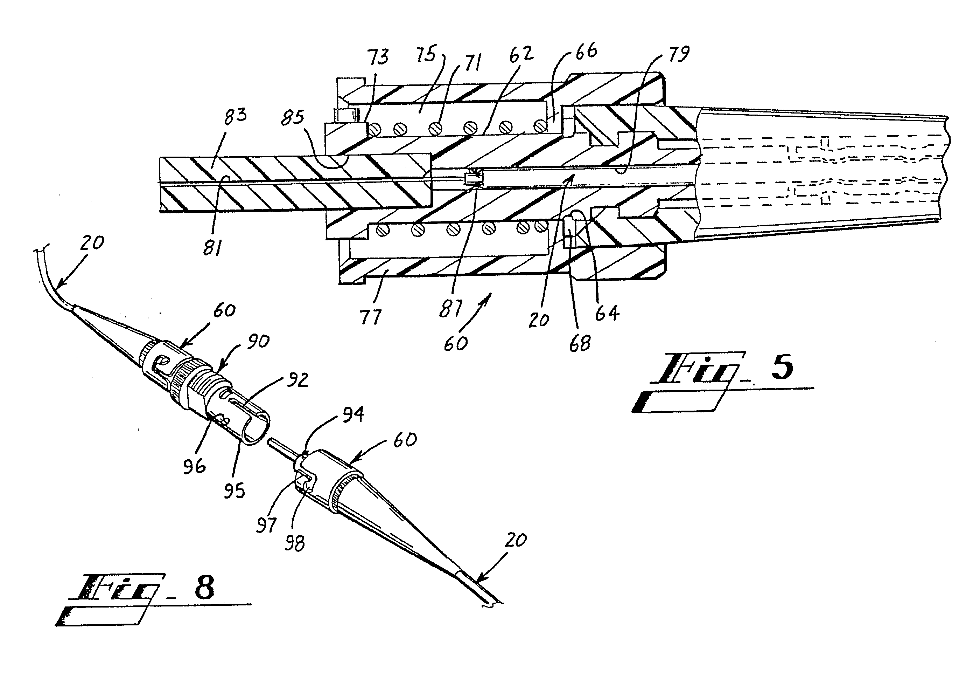

The single fiber cable 20 of tis invention also may be used to provide a multifiber cable 100 (see FIG. 9). Such a cable includes a centrally disposed strength member 102 which may be metallic, for example, and which may be enclosed in a plastic material. Arranged about the central strength member 102 are a plurality of the single fiber cables 20-20. The plurality of single fiber cables 20-20 are enclosed by a jacket 104 which is made of a plastic material.

The connector 60 of FIG. 5 also may be used to terminate the cable of FIG. 9. As shown in FIG. 10, a portion of the jacket 106 is removed and each of the single fiber cables which thus become exposed are terminated with a connector 60, for example.

The cable 100 is ideally suited for use in buildings. In the past, these kinds of cables for this use had been manufactured to include a plurality of heavily buffered optical fibers which were not reinforced with strength members. This, of course, reduced the allowable tensile loading of such cables. The cable 100 increases substantially the allowable tensile loading and results in a smaller outer diameter.

The cable 100 as used in buildings is an example of a cable in which a relatively tight engagement of the jacket 50 of each single fiber cable 20 with its strength members 25-25 is desired. These cables 100-100 must be pulled into and through various passageways in buildings which subjects the cables to tensile loads. The relatively tight compressive engagement of the jacket 50 with the underlying strength members 25-25 and hence with the coated optical fiber prevents relative movement between the jacket and the coated optical fiber during installation. Also, while the use of the cable 20 to transition through a fanout strip to a ribbon requires a substantial length of jacket to be removed, only a relatively small length of jacket need be removed from a cable 20 of a building cable 100 to facilitate connectorization. Accordingly, when cable 100 is made for particular uses in buildings, the drawdown of the jacket 50 is controlled to achieve a relatively tight compressive engagement with the underlying strength members.

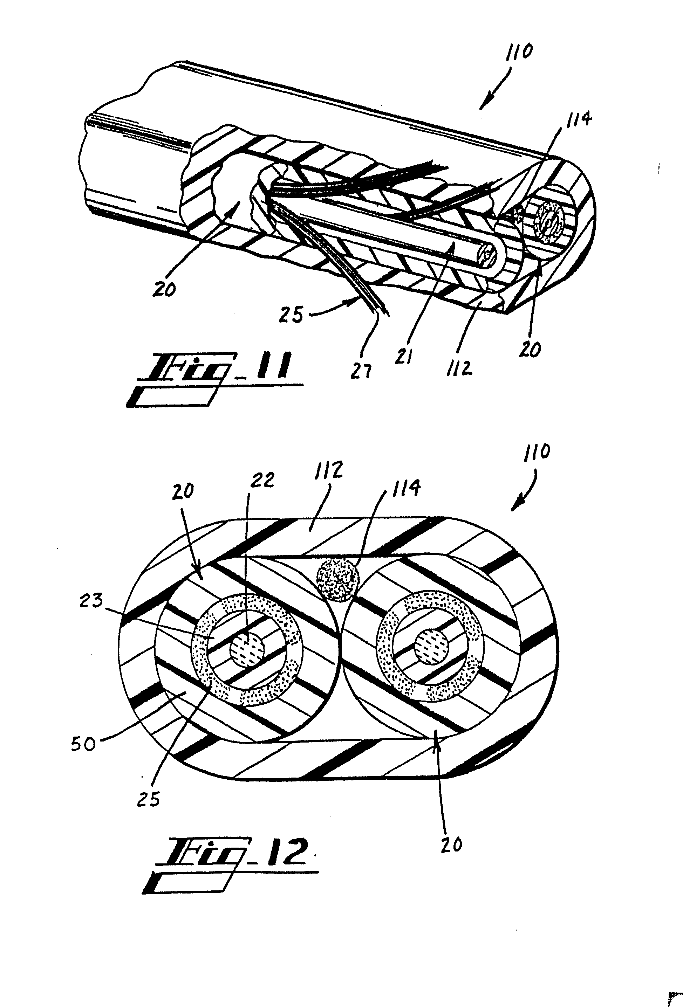

Also included within the scope of this invention is a duplex optical fiber cable 110 (see FIGS. 11 and 12). the cable 110 includes two of the strengthened buffer jacketed optical fiber cables 20-20 which are enclosed in a common outer jacket 112. Typically, the outer jacket has a thickness of about 0.008 inch and is made of a suitable plastic material such as polyvinyl chloride.

The duplex cable 110 shown in FIGS. 11 and 12 also may include facilities which facilitate the removal of the jacket 112 therefrom. To this end, the cable 110 may include a rip cord 114 which is positioned between the two single fiber cables 20-20. The rip cord 114 may be made of a material such as the Kevlar[R] yarn. To remove the jacket 112 from a length of the cable 110, a craftsperson begins by pulling on the rip cord 114 to tear a slit in the jacket which allows removal of the jacket from the two cables 20-20.

Claims

1. An optical fiber cable, which comprises:

an optical fiber which includes a core and a cladding and a coating that encloses said core and said cladding;

at least one length of a fibrous strength member which extends along and in engagement with the optical fiber; and

a jacket which encloses said at least one strength member and which is made of a plastic material, said jacket having a predetermined compressive engagement with said at least one strength member.

2. The optical fiber cable of claim 1, wherein said at least one strength member extends generally linearly and parallel to the longitudinal axis of said optical fiber without intended stranding.

3. The optical fiber cable of claim 1, wherein said at least one strength member is stranded about said optical fiber.

4. The optical fiber cable of claim 1, which includes a plurality of fibrous strength members which are disposed between said optical fiber and said jacket.

5. The optical fiber cable of claim 4, wherein the plurality of strength member are spaced equally circumferentially about said optical fiber.

6. The optical fiber cable of claim 5, wherein each of said strength members includes a plurality of filaments.

7. The optical fiber cable of claim 4, wherein said plurality of strength members extend generally linearly and parallel to the longitudinal axis of said optical fiber without intended stranding.

8. The optical fiber cable of claim 1, wherein an outer diameter of said jacket is substantially constant notwithstanding the degree of compressive engagement of said jacket with said at least one strength member.

9. The optical fiber cable of claim 8, wherein the jacket has an outer diameter of about 0.035 inch.

10. The optical fiber cable of claim 1, wherein said jacket is disposed loosely about said at least one strength member.

11. The optical fiber cable of claim 1, wherein said jacket is in relatively tight compressive engagement with said at least one strength member.

12. The optical fiber cable of claim 1, which includes a plurality of fibrous strength members which are disposed between said optical fiber and said jacket and which are without intended stranding and wherein the application of a tensile load to said optical fiber cable causes strain of the cable to be substantially linearly proportional to the applied load.

13. The optical fiber cable of claim 12, wherein each of said strength members is made of an aramid fibrous material.

14. The optical fiber cable of claim 1, wherein said jacket is made of a polyvinyl chloride plastic material.

15. A duplex optical fiber cable, which comprises a pair of single optical fiber cables, each of said single optical fiber cables being defined in claim 1, and an outer jacket which is made of a plastic material and which encloses said pair of single optical fiber cables.

16. The duplex optical fiber cable of claim 15, wherein said duplex cable also includes a longitudinally extending strand which is disposed between said outer jacket and the single optical fiber cables and which facilitates removal of said outer jacket from said duplex optical fiber cable.

_Fig_1_

_Fig_7_

_Fig_10_

215

0233805

60

20

25

37

31

33

36

35

30

_Fig_ 6

_Fig_ 3

PRIOR ART

50

25

20

23

22

21

22

_Fig_ 2

100

20

22

102

20

104

_Fig_ 9

Fig. 4

0233805

4/5

Fig. 5

Fig. 8

Fig_11

Fig_12